# EUROPÄISCHE PATENTSCHRIFT

(11) **EP 2 692 604 B1**
(45) Veröffentlichungstag und Bekanntmachung des Hinweises auf die Patenterteilung: **08.04.2015**
(21) Anmeldenummer: 12179088.5
(22) Anmeldetag: 02.08.2012
(51) Int. Cl.: B60W 20/00, B60W 10/06, B60W 10/08, B60W 10/26, B60W 50/00

(54) **Verfahren zum Steuern des Ladezustands eines Energiespeichers eines Hybridfahrzeugs**
Method for controlling the charge level of an energy storage device of a hybrid vehicle
Procédé de commande du niveau de charge d'un accumulateur d'énergie d'un véhicule hybride

(43) Veröffentlichungstag der Anmeldung: 05.02.2014
(73) Patentinhaber: TechniSat Digital GmbH, 54550 Daun (DE)
(72) Erfinder: Wagner, Thilo, 01279 Dresden (DE)

(56) Entgegenhaltungen:
- EP-A1- 2 327 598
- EP-A2- 1 211 121
- WO-A1-2011/134992
- US-A- 5 778 326
- US-A- 5 815 824
- US-A1- 2012 035 795
- US-B1- 6 381 522

## Beschreibung

Die Erfindung betrifft ein Verfahren und eine Steuereinrichtung zum Steuern des Ladezustands eines Energiespeichers eines Hybridfahrzeugs mit Rekuperationsbremse.

Unter einem Hybridfahrzeug wird ein Fahrzeug verstanden, das von zwei Antriebsaggregaten unterschiedlicher Art angetrieben wird. Ein Hybridfahrzeug kann beispielsweise von einem Verbrennungsmotor und einem Elektroantriebsmotor angetrieben werden, weshalb ein solches Hybridfahrzeug als "Hybridelektrofahrzeug" bezeichnet wird. Der Verbrennungsmotor wird aus einem Kraftstofftank mit chemischer Energie in Form von Benzin, Diesel, LPG, Wasserstoff oder Autogas versorgt. Der Elektroantriebsmotor wird aus einem wiederaufladbaren Energiespeicher in Form eines Akkumulators oder eines Doppelschicht-Kondensatorenblocks mit elektrischer Energie versorgt.

Ein Hybridelektrofahrzeug besitzt in der Regel eine höhere Effizienz, einen geringeren Kraftstoffverbrauch und eine größere Antriebsleistung im unteren Drehzahlbereich als ein Kraftfahrzeug mit konventionellem Verbrennungsmotorantrieb und vergleichbarer maximaler Antriebsleistung. Das liegt vor allem daran, dass der Verbrennungsmotor des Hybridelektrofahrzeugs häufiger und länger in einem günstigen Wirkungsgradbereich betrieben wird. Ferner kann überschüssige Energie des Verbrennungsmotors unter Verwendung eines Generators in elektrische Energie umgewandelt werden, mit welcher der Energiespeicher des Hybridelektrofahrzeugs aufgeladen werden kann.

Es werden Hybridelektrofahrzeuge mit parallelem Hybridantrieb und Hybridfahrzeuge mit seriellem Hybridantrieb unterschieden.

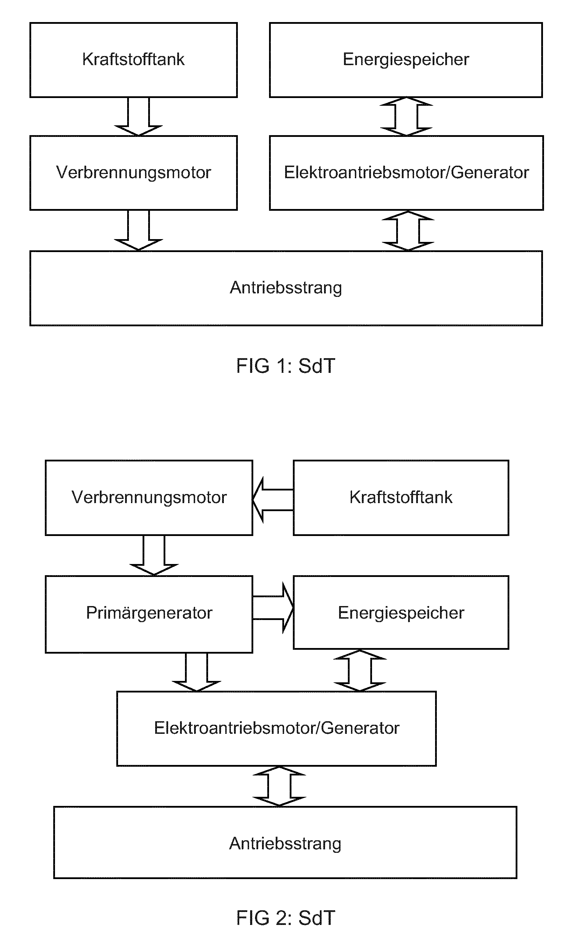

Beim parallelen Hybridantrieb (vgl. Figur 1) können sowohl der Elektroantriebsmotor als auch der Verbrennungsmotor direkt auf den Antriebsstrang wirken. Besteht ein hoher Antriebsleistungsbedarf, beispielsweise beim Beschleunigen oder bei einer Bergauffahrt, treiben der Elektroantriebsmotor und der Verbrennungsmotor das Hybridfahrzeug gemeinsam an. Beim Langstreckenbetrieb, beispielsweise bei einer Autobahnfahrt, kann das Hybridfahrzeug vom Verbrennungsmotor allein angetrieben werden, wobei der Elektroantriebsmotor vom Antriebsstrang mechanisch entkoppelt werden kann. Besteht ein ausreichend niedriger Antriebsleistungsbedarf, beispielsweise bei geringer Geschwindigkeit, kann der Elektroantriebsmotor als vom Antriebsstrang angetriebener Generator fungieren, der Bewegungsenergie in elektrische Energie umwandelt, mit welcher der Energiespeicher aufgeladen wird. Bei besonders niedrigem Antriebsleistungsbedarf, beispielsweise beim Ausparken oder im Schubbetrieb, kann der Elektroantriebsmotor das Hybridfahrzeug allein antreiben, wobei der Verbrennungsmotor abgeschaltet und vom Antriebsstrang mechanisch entkoppelt werden kann.

Beim seriellen Hybridantrieb (vgl. Figur 2) wirkt allein der Elektroantriebsmotor direkt auf den Antriebsstrang, während der Verbrennungsmotor zum Antreiben eines Primärgenerators dient, der den Elektroantriebsmotor oder den Energiespeicher mit elektrischer Energie versorgt. Besteht ein hoher Antriebsleistungsbedarf, beispielsweise beim Beschleunigen oder bei einer Bergauffahrt, werden beide Motoren gleichzeitig betrieben, sodass der Elektroantriebsmotor sowohl vom Energiespeicher als auch vom Primärgenerator elektrische Energie erhält. Beim Langstreckenbetrieb, beispielsweise bei einer Autobahnfahrt, kann der Elektroantriebsmotor vom Primärgenerator allein gespeist werden. Bei ausreichend niedrigem Antriebsleistungsbedarf, beispielsweise bei geringer Fahrgeschwindigkeit, lädt der Primärgenerator parallel zum Speisen des Elektroantriebsmotors den Energiespeicher auf. Bei besonders niedrigem Antriebsleistungsbedarf, beispielsweise beim Ausparken oder im Schubbetrieb, kann der Elektroantriebsmotor allein vom Energiespeicher mit elektrischer Energie versorgt werden, wobei der Verbrennungsmotor abgeschaltet werden kann.

Bei den genannten und anderen Hybridantriebskonzepten wird jeweils eine spezielle Steuereinrichtung verwendet, welche das Aufladen des Energiespeichers steuert. Die Entscheidung der Steuereinrichtung, ob ein Ladevorgang gestartet, beibehalten, beendet oder nicht gestartet wird, kann von verschiedenen Parametern abhängen, unter anderem vom Ladezustand des Energiespeichers oder von der Energieentnahme aus dem Energiespeicher. Beispielsweise startet die Steuereinrichtung dann einen Ladevorgang, wenn der Ladezustand des Energiespeichers eine vorgegebene Ladezuschaltgrenze erreicht, und beendet einen Ladevorgang dann, wenn der Ladezustand des Energiespeichers eine vorgegebene Ladeabschaltgrenze erreicht.

Aus Gründen der Energieeffizienz und des Umweltschutzes sind moderne Hybridfahrzeuge in der Regel mit Rekuperationsbremsen (Nutzbremsen) ausgerüstet. Bei Abbremsen eines solchen Hybridfahrzeugs kann ein Teil der Bewegungsenergie des Hybridfahrzeugs mittels eines Bremsgenerators (in der Regel wird der Elektroantriebsmotor als Bremsgenerator betrieben) in eine Energieart (beispielsweise elektrische Energie) umgewandelt werden, die sich im Energiespeicher des Hybridfahrzeugs speichern lässt. Die gespeicherte Energie kann später an einen Antriebsmotor (beispielsweise an einen Elektroantriebsmotor) übertragen und zum Antreiben des Hybridfahrzeugs genutzt werden.

Allerdings kann es wegen der begrenzten Kapazität des Energiespeichers dazu kommen, dass die bei einem Bremsvorgang von der Rekuperationsbremse lieferbare Energie nicht im Energiespeicher aufgenommen werden kann, weil der Energiespeicher bereits voll aufgeladen ist. In diesem Fall geht die Bremsenergie als Wärmeenergie verloren, was die Energieeffizienz des Hybridfahrzeugs beeinträchtigt. Solch eine Situation kann beispielsweise bei einer Talfahrt auftreten, vor welcher der Energiespeicher bis an seine Ladezustandsobergrenze aufgeladen wurde.

US 6 381 522 B1 offenbart ein Verfahren zum Steuern des Ladezustands eines Energiespeichers eines Hybridfahrzeugs mit einer Rekuperationsbremse, das folgende Schritte aufweist: Bestimmen einer Position und einer Fahrtrichtung des Hybridfahrzeugs, Ermitteln einer voraussichtlichen Fahrtstrecke des Hybridfahrzeugs unter Berücksichtigung der Position und der Fahrtrichtung, Erstellen eines der Fahrtstrecke zugeordneten Energiebedarfsprofils, Bestimmen eines Soll-Ladezustands unter Verwendung des Energiebedarfsprofils und Steuern des Ladezustands entsprechend dem Soll-Ladezustand.

Somit stellt sich die Aufgabe, die Energieeffizienz eines Hybridfahrzeugs zu erhöhen. Die Aufgabe wird mit dem erfindungsgemäßen Verfahren zum Steuern des Ladezustands eines Energiespeichers eines Hybridfahrzeugs mit einer Rekuperationsbremse gelöst, welches die Schritte des Anspruchs 1 aufweist.

Der mit dem Verfahren verfolgte Ansatz besteht darin, den Ladezustand des Energiespeichers so zu steuern, dass die bei einem Bremsvorgang von der Rekuperationsbremse lieferbare Energie vom Energiespeicher aufgenommen werden kann, anstatt in Wärmeenergie umgewandelt zu werden. Das setzt voraus, dass der Ladezustand des Energiespeichers vor einem solchen Bremsvorgang ausreichend niedrig ist. Allerdings darf der Ladezustand des Energiespeichers nur soweit absinken, dass bei Bedarf ausreichend Energie aus dem Energiespeicher zur Verfügung steht. Das setzt insbesondere voraus, dass der Ladezustand des Energiespeichers vor einer leistungsintensiven Betriebsphase des Hybridfahrzeugs (Bergauffahrt, Beschleunigung etc.) ausreichend hoch ist.

Zu diesem Zweck wird der Ladezustand des Energiespeichers an den für die Zukunft erwarteten Energiebedarf des Hybridfahrzeugs angepasst. Dazu wird der erwartete Energiebedarf in Form eines Energiebedarfsprofils bestimmt, welches anhand einer voraussichtlichen Fahrtstrecke des Hybridfahrzeugs gewonnen wird (Die voraussichtliche Fahrtstrecke wird unter Verwendung der Position und der Fahrtrichtung des Hybridfahrzeugs ermittelt.). Auf der Basis des Energiebedarfsprofils wird ein Soll-Ladezustand bestimmt, mit dem der Ladezustand entsprechend dem erwarteten Energiebedarf gesteuert wird.

Das vorgestellte Verfahren erlaubt das vorausschauende Steuern und Optimieren des Ladezustands des Energiespeichers. Da die voraussichtliche Fahrtstrecke berücksichtigt wird, kann der Ladezustand so gesteuert werden, dass bei nahezu jedem Bremsvorgang die von der Rekuperationsbremse lieferbare Energie vom Energiespeicher aufgenommen werden kann. Trotzdem steht auch in Betriebsphasen mit hohem Energiebedarf in der Regel ausreichend Energie aus dem Energiespeicher zur Verfügung. Dadurch wird die Energieeffizienz des Hybridfahrzeugs gegenüber dem Stand der Technik erhöht.

Ein besonderer Vorteil der Erfindung besteht darin, dass das erfindungsgemäße Verfahren mittels einer Navigationseinrichtung und weiterer Einrichtungen ausführbar ist, die bereits an Bord der meisten Hybridfahrzeuge zu finden sind, sodass auf das Installieren zusätzlicher Hardware verzichtet werden kann.

Neben dem erfindungsgemäßen Verfahren wird auch eine Steuereinrichtung zum Steuern des Ladezustands eines Energiespeichers eines Hybridfahrzeugs mit einer Rekuperationsbremse bereitgestellt, wobei die Steuereinrichtung die Merkmale des Anspruchs 13 aufweist.

Weitere Ausführungsformen der Erfindung sind in den abhängigen Patentansprüchen beschrieben.

Die Erfindung wird bezugnehmend auf die folgenden Figuren näher erläutert:
Figur 1 zeigt ein Blockschema eines parallelen Hybridantriebs gemäß dem Stand der Technik.
Figur 2 zeigt ein Blockschema eines seriellen Hybridantriebs gemäß dem Stand der Technik.
Figur 3 zeigt ein Blockschema einer Steuereinrichtung zum Steuern des Ladezustands eines Energiespeichers eines Hybridelektrofahrzeugs mit einer Rekuperationsbremse, gemäß einer Ausführungsform der Erfindung.
Die Figuren 4 bis 7 zeigen jeweils einen schematischen Landkartenausschnitt zum Erläutern einer Ausführungsform des erfindungsgemäßen Verfahrens.
Figur 8 zeigt ein Höhenprofil, ein Energiebedarfsprofil und ein Soll-Ladezustandsprofil gemäß einer Ausführungsform der Erfindung, sowie einen Ladezustandsverlauf gemäß dem Stand der Technik in schematischer Darstellung.
Figur 9 zeigt ein Höhenprofil und einen Ladezustandsverlauf gemäß einer Ausführungsform der Erfindung in schematischer Darstellung.
Figur 10 zeigt ein Schaltdiagramm zum Steuern des Aufladens eines Energiespeichers gemäß einer Ausführungsform der Erfindung.

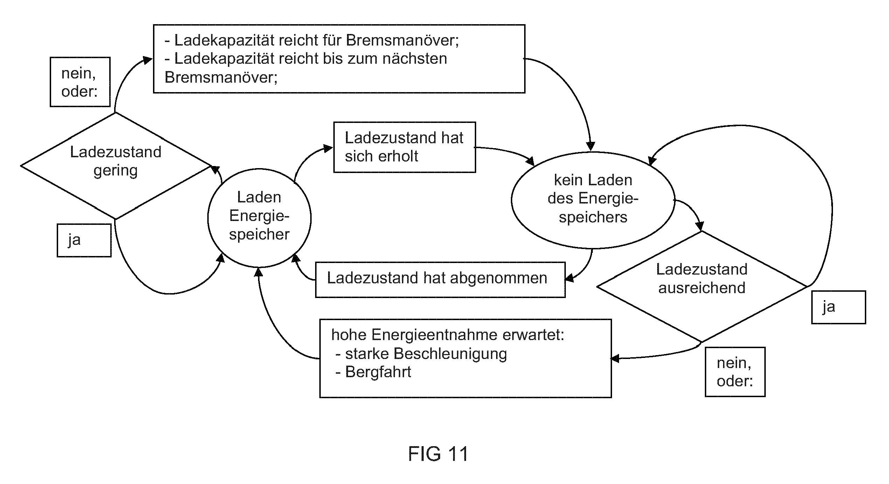

Figur 11 zeigt ein Flussdiagramm einer Strategie zum Aufladen eines Energiespeichers gemäß einer Ausführungsform der Erfindung.

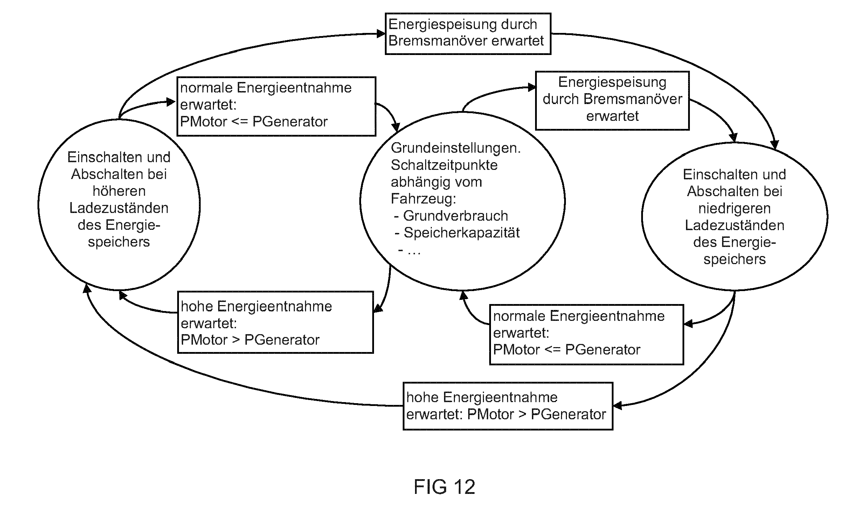

Figur 12 zeigt ein Flussdiagramm zum Verdeutlichen resultierender Änderungen von Zuschaltpunkten und Abschaltpunkten beim Aufladen eines Energiespeichers, gemäß einer Ausführungsform der Erfindung.

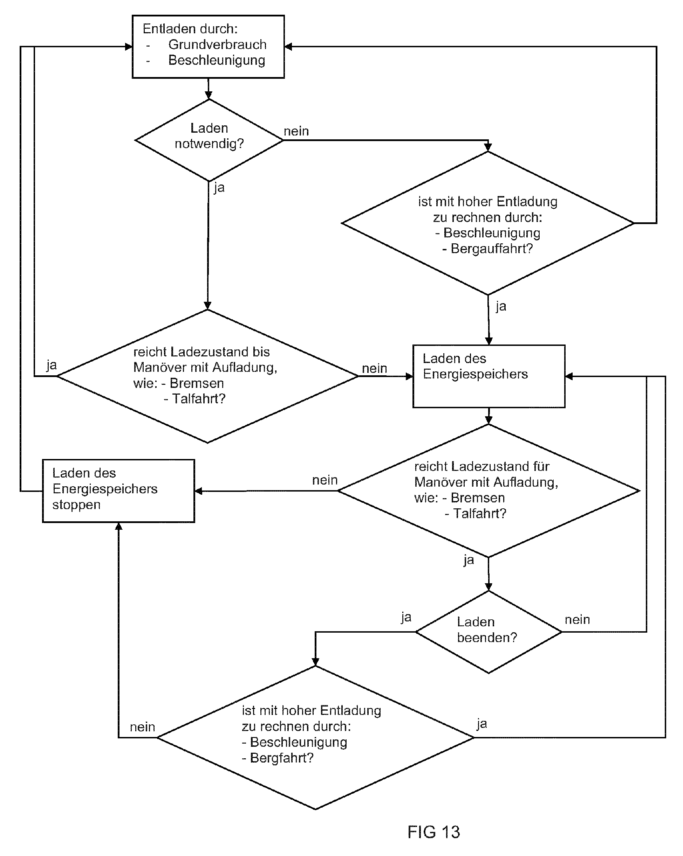

Figur 13 zeigt ein Flussdiagramm eines Entscheidungswegs beim Aufladen eines Energiespeichers eines Hybridfahrzeugs, gemäß einer Ausführungsform der Erfindung.

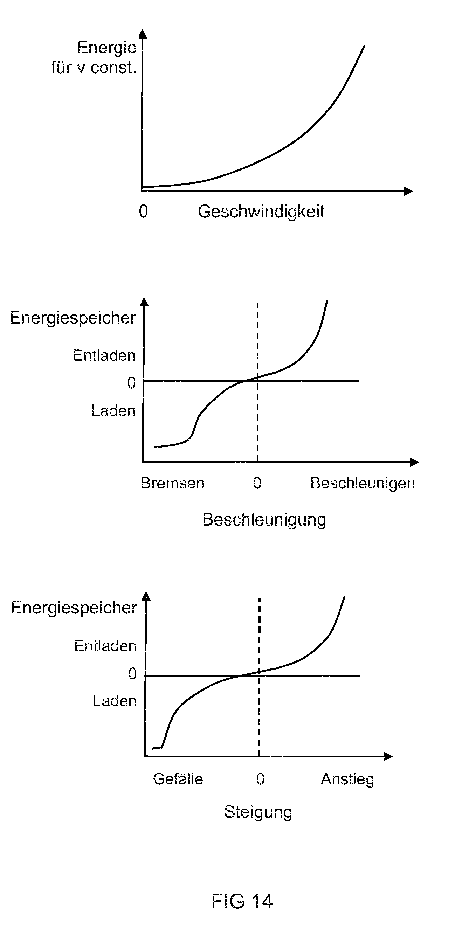

Figur 14 zeigt Diagramme von Funktionen, die für die Optimierung von Ladezeitpunkten beim Aufladen eines Energiespeichers herangezogen werden können, gemäß einer Ausführungsform der Erfindung.

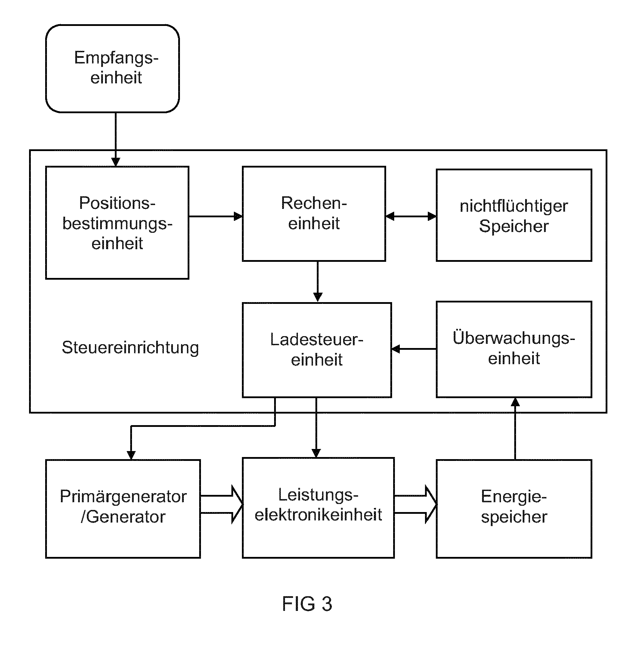

Im Folgenden wird auf **Figur 3** Bezug genommen, welche ein Blockschema einer Steuereinrichtung zum Steuern des Ladezustands eines Energiespeichers eines Hybridelektrofahrzeugs mit einer Rekuperationsbremse gemäß einer Ausführungsform der Erfindung zeigt.

Die Steuereinrichtung weist mehrere in dem Hybridelektrofahrzeug angeordnete Funktionsmodule auf, welche jeweils als Rechteck dargestellt sind. Neben den gezeigten Funktionsmodulen kann die Steuereinrichtung noch weitere, nicht gezeigte Funktionsmodule aufweisen. Die schmalen Pfeile symbolisieren das Übertragen von Informationen oder Signalen, während die Blockpfeile das Übertragen von Energie symbolisieren.

Im Einzelnen gehören eine Positionsbestimmungseinheit, eine Recheneinheit, ein nichtflüchtiger Speicher, eine Ladesteuereinheit und eine Überwachungseinheit zu der Steuereinrichtung. Daneben sind ein Primärgenerator oder Generator ("Primärgenerator/Generator"), eine Leistungselektronikeinheit und ein Energiespeicher abgebildet, die ebenfalls in dem Hybridelektrofahrzeug angeordnet sind und mit der Steuereinrichtung in Verbindung stehen. Zusätzlich können weitere Einrichtungen (nicht gezeigt) des Hybridelektrofahrzeugs mit der Steuereinrichtung in Verbindung stehen, beispielsweise Steuergeräte oder Fahrzeugsensoren.

Bei der Positionsbestimmungseinheit, welche zum Bestimmen einer Position des Hybridelektrofahrzeugs eingerichtet ist, handelt es sich um einen GPS-Empfänger, welcher mit einer Empfangseinheit in Form einer GPS-Antenne verbunden ist. Die Positionsbestimmungseinheit gewinnt Positionskoordinaten, welche eine geografische Position des Hybridelektrofahrzeugs repräsentieren, aus Satellitensignalen, welche die Empfangseinheit empfängt, und übermittelt die Positionskoordinaten an die angeschlossene Recheneinheit.

Bei einer anderen Ausführungsform der Erfindung wird anstelle des GPS-Empfängers eine andere Art von Positionsbestimmungseinheit verwendet, beispielsweise ein GALILEO-Empfänger oder ein GLONASS-Empfänger, der mit einer passenden Empfangseinheit ausgestattet ist.

Bei einer weiteren Ausführungsform der Erfindung ist die Positionsbestimmungseinheit Bestandteil eines terrestrischen Funknavigationssystems oder eines Koppelnavigationssystems.

Die Recheneinheit ist als ein Mikroprozessor ausgebildet und verfügt über einen Arbeitsspeicher (nicht gezeigt), der zum zwischenzeitlichen Speichern von Variablen und Zwischenergebnissen dient, die beim Ausführen von Rechenprozessen generiert werden. Die Recheneinheit kann aus den von der Positionsbestimmungseinheit übermittelten Positionskoordinaten eine geografische Position des Hybridelektrofahrzeugs ermitteln. Ferner ist die Recheneinheit dazu in der Lage, aus mehreren geografischen Positionen eine Fahrtrichtung des Hybridelektrofahrzeugs zu bestimmen. Des Weiteren ist die Recheneinheit zum Ermitteln einer voraussichtlichen Fahrtstrecke des Hybridelektrofahrzeugs unter Berücksichtigung der Position und der Fahrtrichtung ausgebildet und kann ein der Fahrtstrecke zugeordnetes Energiebedarfsprofil bereitstellen. Außerdem ist die Recheneinheit dafür vorgesehen, unter Verwendung des Energiebedarfsprofils einen Soll-Ladezustand zu bestimmen. Zusätzlich kann die Recheneinheit Steuerdaten, welche eine Ladeabschaltgrenze und eine Ladezuschaltgrenze des Soll-Ladezustands repräsentieren, an die angeschlossene Ladesteuereinheit übertragen.

Bei dem mit der Recheneinheit verbundenen nichtflüchtigen Speicher handelt es sich beispielsweise um einen oder mehrere EEPROMs, Flash-Speicher, magnetische Datenträger oder optische Datenträger. In dem nichtflüchtigen Speicher ist eine Landkartendatenbank mit einer Vielzahl von Landkartendaten gespeichert, zu denen insbesondere Höhendaten und Verkehrsregelungsdaten gehören. Die Höhendaten repräsentieren die Höhe bestimmter geografischer Positionen über dem Meeresspiegel. Die Verkehrsregelungsdaten repräsentieren beispielsweise Geschwindigkeitsbegrenzungen, Kreuzungen, Ortseingänge, Haltestellen im Linienverkehr, vorgeschriebene Fahrtrichtungen oder Vorfahrtsregelungen. Daneben enthält der nichtflüchtige Speicher eine Fahrzeugdatenbank, welche Fahrzeugdaten des Hybridelektrofahrzeugs aufweist, beispielsweise eine Ladezustandsobergrenze und eine Ladezustandsuntergrenze des Energiespeichers, ein Fahrzeuggewicht, einen Luftwiderstand, einen Rollwiderstand, ein Rekuperationsvermögen der Bremsanlage, eine Verbrennungsmotorleistung, eine Elektroantriebsmotorleistung, eine Generatorleistung, eine Bremsleistung, eine Höchstgeschwindigkeit, einen leistungsabhängigen Anteil des Verbrennungsmotors an einer Antriebsleistung oder einen Standard-Grundenergiebedarf. Der Standard-Grundenergiebedarf repräsentiert die elektrische Energie, die beim Betrieb des Hybridelektrofahrzeugs typischerweise für weitere elektrische Verbraucher neben dem Elektroantriebsmotor (Beleuchtung, Lüfter, Steuergeräte, Scheibenwischer, Klimaanlage, Anzeigen, Unterhaltungselektronik etc.) benötigt wird. Des Weiteren enthält der nichtflüchtige Speicher eine vorgegebene Fahrtstreckenlänge.

Bei einer anderen Ausführungsform der Erfindung enthält der nichtflüchtige Speicher Daten zum Fahrverhalten eines Fahrzeugführers des Hybridelektrofahrzeugs, die während früherer Fahrten des Fahrzeugführers aufgezeichnet wurden und unter anderem fahrertypische Fahrgeschwindigkeiten, Beschleunigungsvorgänge und Bremsvorgänge wiedergeben.

Bei einer weiteren Ausführungsform der Erfindung weist der nichtflüchtige Speicher Energiebedarfsdaten auf, welche Energiebedarfe und Rekuperationsenergien repräsentieren, die mehreren Straßen zugeordnet sind. Die Energiebedarfsdaten können beispielsweise während vorangegangener Fahrten des Hybridelektrofahrzeugs oder eines anderen Fahrzeugs aufgenommen worden sein.

Bei der hier betrachteten Ausführungsform der Erfindung sind die Positionsbestimmungseinheit, die Recheneinheit und der nichtflüchtige Speicher Bestandteile einer Navigationseinrichtung, die primär zum Berechnen einer Fahrtroute auf Basis einer Zieleingabe eines Benutzers und zum Ausgeben entsprechender Zielführungsanweisungen dient. Alternativ dazu können die Positionsbestimmungseinheit, die Recheneinheit und der nichtflüchtige Speicher auch als separate Module vorliegen oder anderen Einrichtungen des Hybridelektrofahrzeugs angehören, beispielsweise einem Ortungssystem oder einem Bordcomputer.

Die außerdem gezeigte Ladesteuereinheit, bei der es sich beispielsweise um einen Fahrzeugrechner oder um ein Steuergerät handelt, ist zum Steuern des Ladezustands des Energiespeichers unter Berücksichtigung eines Soll-Ladezustands eingerichtet. Dazu empfängt die Ladesteuereinheit Steuerdaten von der Recheneinheit und von der Überwachungseinheit. Die von der Recheneinheit empfangenen Steuerdaten repräsentieren den Soll-Ladezustand in Form einer Ladeabschaltgrenze und einer Ladezuschaltgrenze. Die von der Überwachungseinheit empfangenen Steuerdaten repräsentieren den aktuellen Ladezustand des Energiespeichers.

Zum Starten oder Beenden eines Aufladevorgangs sendet die Ladesteuereinheit entsprechende Steuersignale an die Leistungselektronikeinheit und an den Generator oder Primärgenerator. Die Ladesteuereinheit startet einen Ladevorgang dann, wenn der Ladezustand des Energiespeichers die Ladezuschaltgrenze oder den darunterliegenden Ladezustandsbereich erreicht. Die Ladesteuereinheit beendet einen Ladevorgang dann, wenn der Ladezustand die Ladeabschaltgrenze oder den darüberliegenden Ladezustandsbereich erreicht.

Überträgt die Recheneinheit keine Steuerdaten an die Ladesteuereinheit, kann die Ladesteuereinheit den Ladezustand des Energiespeichers auch entsprechend einer Referenz-Ladeabschaltgrenze und einer Referenz-Ladezuschaltgrenze steuern, welche in der Ladesteuereinheit gespeichert sind.

Bei einer anderen Ausführungsform der Erfindung werden die Funktionen der Ladesteuereinheit von der Recheneinheit selbst übernommen, sodass keine separate Ladesteuereinheit vorliegt.

Die Überwachungseinheit ist zum Ermitteln des aktuellen Ladezustands des Energiespeichers und zum Übertragen von Steuerdaten, welche den aktuellen Ladezustand repräsentieren, an die Ladesteuereinheit eingerichtet. Dazu ist die Überwachungseinheit sowohl mit der Ladesteuereinheit als auch mit dem Energiespeicher verbunden.

Der Generator oder Primärgenerator dient zum Umwandeln von Bewegungsenergie in elektrische Energie, sodass ein elektrischer Ladestrom zum Aufladen des Energiespeichers erzeugt wird. Bei einem Hybridelektrofahrzeug mit parallelem Hybridantrieb (vgl. Figur 1) kommt ein Generator zum Einsatz, welcher vom Antriebsstrang des Hybridelektrofahrzeugs angetrieben wird. In einem anderen Betriebszustand kann der Generator auch als Elektroantriebsmotor fungieren. Bei einem Hybridelektrofahrzeug mit seriellem Hybridantrieb (vgl. Figur 2) kommt stattdessen ein Primärgenerator zum Einsatz, welcher vom Verbrennungsmotor angetrieben wird und nicht als Elektroantriebsmotor einsetzbar ist.

Die Leistungselektronikeinheit dient zum Regeln des von dem Generator oder Primärgenerator gelieferten Ladestroms und zum Übertragen des geregelten Ladestroms zu dem Energiespeicher. Ferner ist die Leistungselektronikeinheit zum Empfangen von Steuersignalen von der Ladesteuereinheit eingerichtet, sodass ein Ladevorgang gestartet, beibehalten, beendet oder nicht gestartet wird.

Der Energiespeicher dient zum Speichern elektrischer Energie, die von dem Primärgenerator oder Generator geliefert wird. Bei Bedarf liefert der Energiespeicher die gespeicherte Energie an einen Elektroantriebsmotor oder an andere elektrische Verbraucher des Hybridelektrofahrzeugs. Der Energiespeicher weist eine technisch bedingte Ladezustandsobergrenze auf, die den höchsten Ladezustand repräsentiert, den der Energiespeicher erreichen darf. Ferner weist der Energiespeicher eine technisch bedingte Ladezustandsuntergrenze auf, die den niedrigsten Ladezustand repräsentiert, den der Energiespeicher erreichen darf. Die Ladezustandsuntergrenze ist beispielsweise durch einen minimalen Ladezustand vorgegeben, der zum Starten des Verbrennungsmotors notwendig ist.

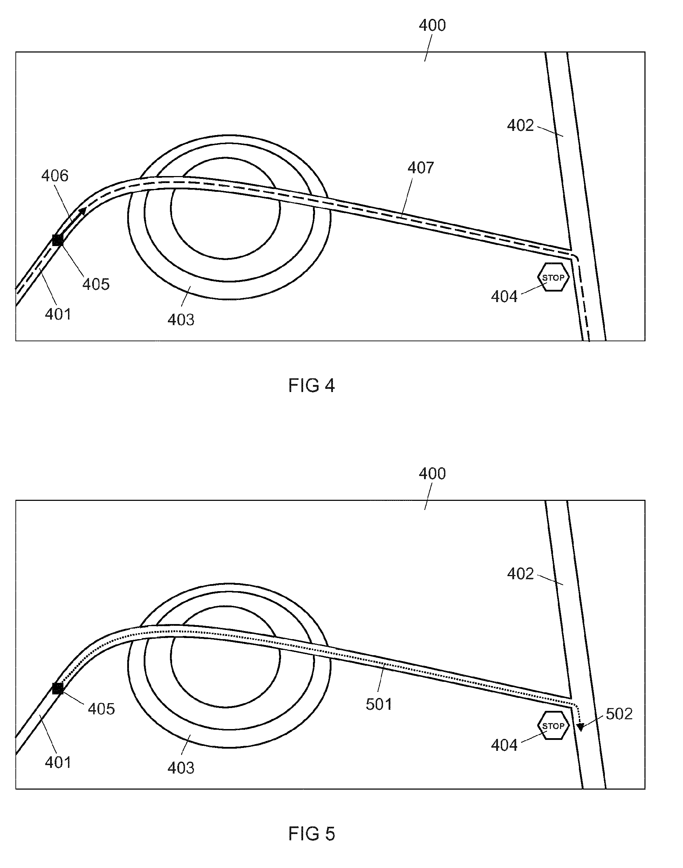

Im Folgenden wird auf die **Figuren 4 und 5** Bezug genommen, welche jeweils einen schematischen Landkartenausschnitt 400 zum Erläutern einer Ausführungsform des erfindungsgemäßen Verfahrens zeigen.

Der Landkartenausschnitt 400 enthält eine erste Straße 401 und eine Querstraße 402, auf welche die erste Straße 401 einmündet. Die erste Straße 401 überquert einen durch mehrere Höhenlinien symbolisierten Berg 403. Außerdem ist ein Stoppschild 404 dargestellt, gemäß dem ein von der ersten Straße 401 kommendes Fahrzeug an der Einmündung halten soll.

Ferner zeigt Figur 4 eine als unterbrochene Linie dargestellte Fahrtroute 407, welche von einem Hybridelektrofahrzeug befahren wird, das mit einer Rekuperationsbremse und mit der Steuereinrichtung gemäß der Erfindung ausgestattet ist. Die Fahrtroute 407 wurde von der Navigationseinrichtung des Hybridelektrofahrzeugs entsprechend einer Zieleingabe eines Benutzers berechnet. Alternativ dazu kann die Fahrtroute 407 auch auf der Basis früherer Fahrten geschätzt beziehungsweise angenommen worden sein. Die Startposition und die Zielposition der Fahrtroute 407 befinden sich außerhalb des Landkartenausschnitts 400 und sind daher in Figur 4 nicht sichtbar.

Gemäß der Erfindung werden bei einem ersten Verfahrensschritt mittels der Positionsbestimmungseinheit und der Recheneinheit eine durch ein schwarzes Quadrat symbolisierte Position 405 und eine durch einen Pfeil symbolisierte Fahrtrichtung 406 des Hybridelektrofahrzeugs bestimmt.

Bei einem zweiten Verfahrensschritt wird mittels der Recheneinheit eine voraussichtliche Fahrtstrecke 501 des Hybridelektrofahrzeugs ermittelt, die als punktierte Linie in Figur 5 dargestellt ist. Dabei werden die Position 405 und die Fahrtrichtung 406 berücksichtigt, welche beim ersten Verfahrensschritt ermittelt wurden. Anhand der Position 405 und der Fahrtrichtung 406 wird festgestellt, dass sich das Hybridelektrofahrzeug auf der Fahrtroute 407 befindet und in Richtung der Zielposition der Fahrtroute 407 fährt. Daraus wird geschlussfolgert, dass das Hybridelektrofahrzeug voraussichtlich von der Position 405 aus entlang der Fahrtroute 407 bis zu der Zielposition der Fahrtroute 407 fahren wird. Deshalb wird eine voraussichtliche Fahrtstrecke 501 ermittelt, die an der Position 405 beginnt und entlang der Fahrtroute 407 verläuft. Die Fahrtstrecke 501 hat die vorgegebene Fahrtstreckenlänge aus dem nichtflüchtigen Speicher, sodass die Fahrtstrecke 501 an dem Endpunkt 502 endet.

Bei einer anderen Ausführungsform der Erfindung wird die Länge der Fahrtstrecke derart gewählt, dass die Fahrtstrecke bis zu einer Position verläuft, an welcher der Energiespeicher voraussichtlich die Ladezustandsuntergrenze erreichen würde, wenn der Energiespeicher entlang der Fahrtstrecke nicht aufgeladen würde.

Bei einer weiteren Ausführungsform der Erfindung wird die Länge der Fahrtstrecke derart gewählt, dass die Fahrtstrecke bis zu einer Position verläuft, an welcher der Energiespeicher voraussichtlich die Ladezustandsobergrenze erreichen würde, wenn der Energiespeicher entlang der gesamten Fahrtstrecke aufgeladen würde.

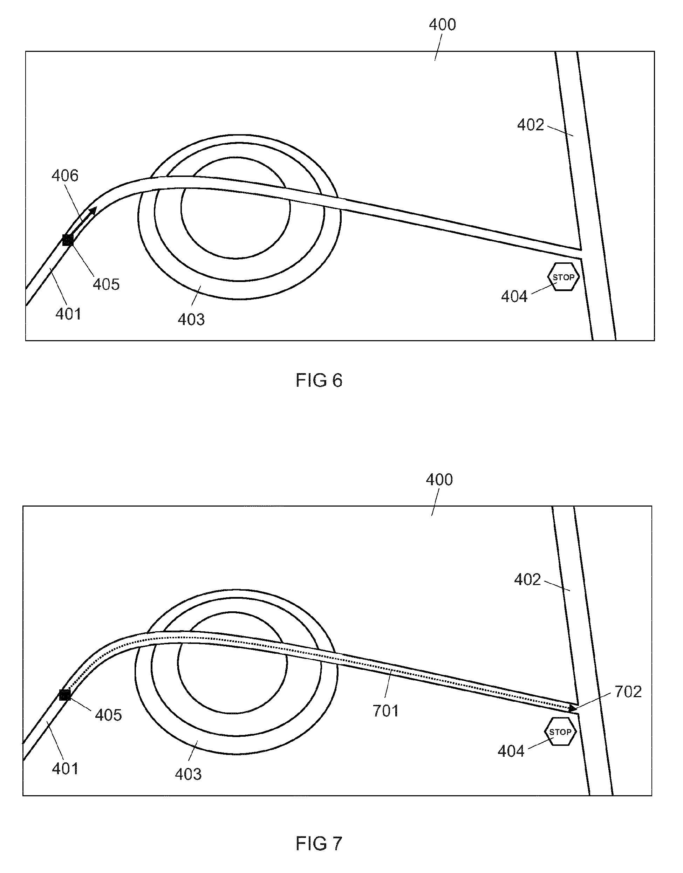

Bei einer weiteren Ausführungsform der Erfindung, die bezugnehmend auf die **Figuren 6 und 7** erläutert wird, befindet sich das Hybridelektrofahrzeug an derselben Position 405 in derselben Fahrtrichtung 406, wobei aber keine Fahrtroute vorgegeben ist. Anhand von Landkartendaten, welche der Umgebung des Hybridelektrofahrzeugs zugeordnet sind, wird unter Berücksichtigung der Position 405 und der Fahrtrichtung 406 festgestellt, dass sich das Hybridelektrofahrzeug auf der ersten Straße 401 befindet und in Richtung der Querstraße 402 fährt. Ferner wird aus den Landkartendaten entnommen, dass die erste Straße 401 zwischen der Position 405 und der Einmündung keine Abzweigung aufweist. Daraus wird geschlussfolgert, dass das Hybridelektrofahrzeug voraussichtlich von der Position 405 aus entlang der ersten Straße 401 zu der Einmündung fahren wird. Zur weiteren Fahrt des Hybridelektrofahrzeugs wird keine Annahme gemacht, da nicht mit hinreichender Sicherheit vorhersagbar ist, ob das Hybridelektrofahrzeug an der Einmündung nach rechts oder nach links auf die Querstraße 402 abbiegen wird. Deshalb wird eine voraussichtliche Fahrtstrecke 701 ermittelt, die an der Position 405 beginnt, entlang der ersten Straße 401 verläuft und an der Einmündung (Endpunkt 702) endet.

Alternativ dazu kann die voraussichtliche Fahrtstrecke bei der vorliegenden Ausführungsform auch derart festgelegt werden, dass sie über die Einmündung hinausführt. In diesem Fall verläuft die voraussichtliche Fahrtstrecke nach der Einmündung in diejenige Richtung, in welcher der höhere Antriebsenergiebedarf vermutet wird. Beispielsweise verläuft die Fahrtstrecke bergauf, anstatt bergab. Auf diese Weise kann bei dem erfindungsgemäßen Verfahren vermieden werden, dass der Energiespeicher des Hybridelektrofahrzeugs nach dem Passieren der Einmündung unzureichend aufgeladen ist.

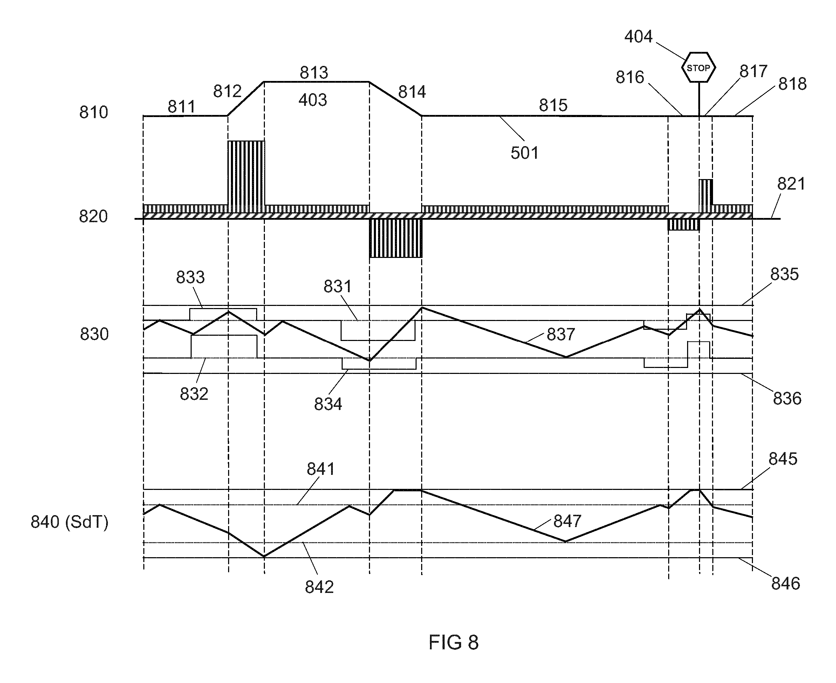

Im Folgenden wird auf **Figur 8** Bezug genommen, welche ein Höhenprofil 810, ein Energiebedarfsprofil 820 und ein Soll-Ladezustandsprofil 830 gemäß einer Ausführungsform der Erfindung, sowie einen Ladezustandsverlauf 840 gemäß dem Stand der Technik in schematischer Darstellung zeigt.

Das Höhenprofil 810 repräsentiert den Verlauf der Fahrtstrecke 501 bezüglich ihrer Höhe über dem Meeresspiegel. Wie das Höhenprofil 810 verdeutlicht, verläuft die Fahrtstrecke 501 zunächst nahezu eben, das heißt ohne signifikanten Höhenunterschied (Fahrtstreckenabschnitt 811). An der aufsteigenden Flanke des Bergs 403 steigt die Fahrtstrecke 501 stark an (Fahrtstreckenabschnitt 812). Auf der Hochebene des Bergs 403 verläuft die Fahrtstrecke 501 nahezu eben (Fahrtstreckenabschnitt 813). An der absteigenden Flanke des Bergs 403 fällt die Fahrtstrecke 501 deutlich ab (Fahrtstreckenabschnitt 814). Nach Verlassen des Bergs 403 verläuft die Fahrtstrecke 501 wieder nahezu eben (Fahrtstreckenabschnitte 815 bis 818). Zusätzlich ist das Stoppschild 404 abgebildet, an dem das Hybridelektrofahrzeug halten soll. Bei einem dritten Verfahrensschritt wird ein der Fahrtstrecke 501 zugeordnetes Energiebedarfsprofil 820 erstellt. Das Energiebedarfsprofil 820 repräsentiert entlang der Fahrtstrecke benötigte Antriebsenergie (Antriebsenergiebedarf), entlang der Strecke benötigte Energie für weitere elektrische Verbraucher neben dem Elektroantriebsmotor (Grundenergiebedarf) und entlang der Fahrtstrecke bei Bremsvorgängen rekuperierbare Energie (Rekuperationsenergie) des Hybridelektrofahrzeugs.

Bei einer anderen Ausführungsform der Erfindung wird beim Erstellen des Energieprofils anstelle des vorgegebenen Standard-Grundenergiebedarfs ein Grundenergiebedarf verwendet, der anhand von Betriebszuständen der weiteren elektrischen Verbraucher berechnet wird. Der berechnete Grundenergiebedarf kann entlang der Fahrtstrecke gleich bleiben (konstanter Grundenergiebedarf) oder variieren (variabler Grundenergiebedarf). Außerdem können beim Berechnen des Grundenergiebedarfs zusätzliche Informationen, beispielsweise eine Außentemperatur, eine Umgebungshelligkeit oder erwartete Wetterverhältnisse, berücksichtigt werden.

Bei einer weiteren Ausführungsform der Erfindung werden beim Erstellen des Energiebedarfsprofils zusätzlich Verkehrssituationsdaten berücksichtigt, die eine aktuelle Verkehrssituation repräsentieren, welche für die Fahrtstrecke relevant ist. Die Verkehrssituationsdaten können per Funk, beispielsweise über TMC, an die Steuereinrichtung übertragen worden sein.

Bei einer weiteren Ausführungsform der Erfindung werden beim Erstellen des Energiebedarfsprofils zusätzlich Daten zum Fahrverhalten eines Fahrzeugführers des Hybridelektrofahrzeugs berücksichtigt, die im nichtflüchtigen Speicher vorliegen und bei vorangegangenen Fahrten des Fahrzeugführers aufgezeichnet wurden.

Bei einer weiteren Ausführungsform der Erfindung wird beim Erstellen des Energiebedarfsprofils zusätzlich eine aktuelle Geschwindigkeit des Hybridelektrofahrzeugs berücksichtigt, die von einer Geschwindigkeitsmesseinrichtung des Hybridelektrofahrzeugs bereitgestellt wird.

Das Energiebedarfsprofil wird auf der Basis positionsabhängiger Energiebedarfsdaten erstellt, die im nichtflüchtigen Speicher der Navigationseinrichtung vorliegen und Antriebsenergiebedarf, Standard-Grundenergiebedarf und Rekuperationsenergie entlang mehrerer Straßen repräsentieren. Die positionsabhängigen Energiebedarfsdaten wurden während einer vorangegangenen Fahrt eines anderen Fahrzeugs aufgezeichnet.

Das Energiebedarfsprofil 820 zeigt mehrere schraffierte Flächen. Die oberhalb einer Nulllinie 821 angeordneten senkrecht schraffierten Flächen repräsentieren jeweils Antriebsenergiebedarf des Hybridelektrofahrzeugs, während die oberhalb der Nulllinie 821 angeordnete schräg schraffierte Fläche den Standard-Grundenergiebedarf des Hybridelektrofahrzeugs repräsentiert. Die unterhalb der Nulllinie 821 angeordneten schraffierten Flächen repräsentieren jeweils Rekuperationsenergie.

Wie das Energiebedarfsprofil 820 verdeutlicht, besteht auf den Fahrtstreckenabschnitten 811, 813, 815, 818 voraussichtlich ein vergleichsweise niedriger Antriebsenergiebedarf. Das ist darauf zurückzuführen, dass diese Fahrtstreckenabschnitte 811, 813, 815, 818 nahezu eben verlaufen und mit nahezu gleichbleibender Geschwindigkeit befahren werden sollen. Daher wird Antriebsenergie im Wesentlichen zum Überwinden des Luftwiderstands und des Rollwiderstandes des Hybridelektrofahrzeugs benötigt.

Dagegen besteht voraussichtlich auf dem Fahrtstreckenabschnitt 812 ein hoher und auf dem Fahrtstreckenabschnitt 817 ein mäßiger Antriebsenergiebedarf. Das ist darauf zurückzuführen, dass auf diesen Fahrtstreckenabschnitten 812, 817 zusätzliche Antriebsenergie benötigt wird, um den Höhenunterschied an der ansteigenden Flanke des Bergs 403 zu überwinden beziehungsweise das Hybridelektrofahrzeug nach dem Halt am Stoppschild 404 zu beschleunigen. In diesem Zusammenhang ist zu bemerken, dass ein hoher Antriebsenergiebedarf zum vollständigen Entladen des Energiespeichers führen kann, sodass die verfügbare Gesamt-Antriebsleistung stark vermindert wird. Um ein solches vollständiges Entladen des Energiespeichers zu vermeiden, wird der Energiespeicher vorausschauend aufgeladen.

Auf den Fahrtstreckenabschnitten 814, 816 wird voraussichtlich keine Antriebsenergie benötigt, sondern mit Rekuperationsenergie gerechnet. Das ist darauf zurückzuführen, dass auf diesen Fahrtstreckenabschnitten 814, 816 das Hybridelektrofahrzeug wegen seiner Talfahrt an der absteigenden Flanke des Bergs 403 beziehungsweise wegen seines Halts am Stoppschild 404 abgebremst werden muss. In diesem Zusammenhang ist zu bemerken, dass die beim Abbremsen rekuperierbare Energie von der Geschwindigkeit zu Beginn eines Bremsvorgangs abhängt.

Bei einem vierten Verfahrensschritt wird ein Soll-Ladezustand bestimmt, indem das in Figur 8 gezeigte Soll-Ladezustandsprofil 830 erstellt wird.

Das Soll-Ladezustandsprofil 830 repräsentiert eine Mehrzahl von Soll-Ladezuständen des Energiespeichers entlang der Fahrtstrecke 501. Das Soll-Ladezustandsprofil 830 weist eine Ladeabschaltgrenze 833 und eine Ladezuschaltgrenze 834 auf, welche als durchgängige Linien dargestellt sind. Zusätzlich sind eine Referenz-Ladeabschaltgrenze 831 und eine Referenz-Ladezuschaltgrenze 832 gezeigt, die auf Fahrzeugdaten des Hybridelektrofahrzeugs beruhen und als Punktlinien dargestellt sind. Außerdem sind eine Ladezustandsobergrenze 835 und eine Ladezustandsuntergrenze 836 abgebildet, die vom Ladezustand des Energiespeichers nicht überschritten beziehungsweise unterschritten werden dürfen und als durchgängige Linien dargestellt sind.

Die Ladeabschaltgrenze 833 und die Ladezuschaltgrenze 834 sind derart ausgebildet, dass der Energiespeicher einen Ladezustand erreichen kann, der das Decken eines erwarteten Energiebedarfs (Antriebsenergiebedarf und Grundenergiebedarf) oder das Aufnehmen erwarteter Rekuperationsenergie ermöglicht. Dafür sind die Ladeabschaltgrenze 833 und die Ladezuschaltgrenze 834 vor einem Fahrtstreckenabschnitt mit hohem Antriebsenergiebedarf gegenüber der Referenz-Ladeabschaltgrenze 831 und der Referenz-Ladezuschaltgrenze 832 nach oben verschoben. Andererseits sind die Ladeabschaltgrenze 833 und die Ladezuschaltgrenze 834 vor einem Fahrtstreckenabschnitt mit Rekuperationsenergie gegenüber der Referenz-Ladeabschaltgrenze 831 und der Referenz-Ladezuschaltgrenze 832 nach unten verschoben.

Das Soll-Ladezustandsprofil 830 wird unter Verwendung des Energiebedarfsprofils 820 und weiterer Fahrzeugdaten des Hybridelektrofahrzeugs erstellt. Die weiteren Fahrzeugdaten sind im nichtflüchtigen Speicher gespeichert und repräsentieren beispielsweise die Ladezustandsobergrenze 835, die Ladezustandsuntergrenze 836 oder den Anteil des Verbrennungsmotors an der aufzubringenden Antriebsleistung.

Bei einem fünften Verfahrensschritt wird der Ladezustand des Energiespeichers unter Verwendung des Soll-Ladezustandsprofils 830 gesteuert, während das Hybridelektrofahrzeug die Fahrtstrecke 501 befährt. Ein beispielhafter Verlauf des Ladezustands entlang der Fahrtstrecke 501 wird von der Ladezustandskurve 837 repräsentiert, welche als durchgängige Linie dargestellt ist.

Zum Steuern des Ladezustands wird permanent oder in kurzen zeitlichen Abständen die aktuelle Position des Hybridelektrofahrzeugs auf der Fahrtstrecke 501 bestimmt. Ferner werden die Werte der Ladeabschaltgrenze 833 und der Ladezuschaltgrenze 834 ermittelt, welche der aktuellen Position gemäß dem Soll-Ladezustandsprofil 830 zugeordnet sind. Diese Werte werden in Form von Steuerdaten an die Ladesteuereinheit übertragen. Die Ladesteuereinheit steuert den Ladezustand des Energiespeichers entsprechend den empfangenen Werten der Ladeabschaltgrenze 833 und der Ladezuschaltgrenze 834.

Erreicht der Ladezustand die Ladeabschaltgrenze 833 oder den darüberliegenden Bereich, kann der Verbrennungsmotor abgeschaltet werden, sodass ein weiteres Ansteigen des Ladezustands vermieden wird. Erreicht der Ladezustand die Ladezuschaltgrenze 834 oder den darunterliegenden Bereich kann der Verbrennungsmotor gestartet werden, sodass ein weiteres Absinken des Ladezustands vermieden wird.

Sollte die Recheneinheit einmal keine Steuerdaten an die Ladesteuereinheit übertragen, wird der Ladezustand des Energiespeichers von der Ladesteuereinheit entsprechend der Referenz-Ladeabschaltgrenze 831 und der Referenz-Ladezuschaltgrenze 832 gesteuert.

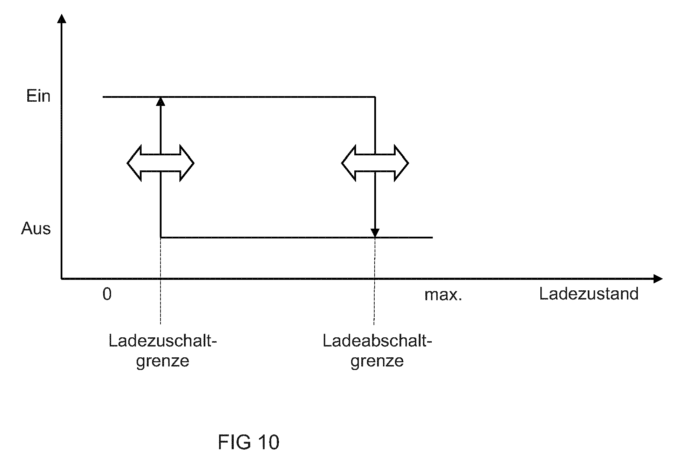

Bei der vorliegenden Ausführungsform der Erfindung wird ein Ladevorgang bei einem vergleichsweise hohen Ladezustand gestartet oder beendet, wenn eine Bergauffahrt oder ein starkes Beschleunigen des Hybridelektrofahrzeugs bevorsteht. Dagegen wird ein Ladevorgang bei einem vergleichsweise niedrigen Ladezustand gestartet oder beendet, wenn eine Talfahrt beziehungsweise ein Abbremsen des Hybridelektrofahrzeugs bevorsteht. Mit anderen Worten werden die Ladeabschaltgrenze 833 und die Ladezuschaltgrenze 834 entlang der Fahrtstrecke 501 entsprechend dem erwarteten Energiebedarf hin und her verschoben, wie die breiten Pfeile in **Figur 10** verdeutlichen.

Wie die Ladezustandskurve 837 in Figur 8 zeigt, sind die Ladeabschaltgrenze 833 und die Ladezuschaltgrenze 834 am Ende des Fahrtstreckenabschnitts 813 gegenüber der Referenz-Ladeabschaltgrenze 831 und der Referenz-Ladezuschaltgrenze 832 derart nach unten verschoben, dass der Energiespeicher so stark entladen wird, dass die gesamte Rekuperationsenergie, welche bei der Talfahrt entlang des Fahrtstreckenabschnitts 814 bereitgestellt wird, vom Energiespeicher aufgenommen werden kann.

Analog dazu sind die Ladeabschaltgrenze 833 und die Ladezuschaltgrenze 834 am Ende des Fahrtstreckenabschnitts 815 gegenüber der Referenz-Ladeabschaltgrenze 831 und der Referenz-Ladezuschaltgrenze 832 derart nach unten verschoben, dass der Energiespeicher so stark entladen wird, dass die gesamte Rekuperationsenergie, welche beim Abbremsen entlang des Fahrtstreckenabschnitts 816 bereitgestellt wird, vom Energiespeicher aufgenommen werden kann.

Zum Vergleich zeigt Figur 8 einen Ladezustandsverlauf 840 eines anderen Hybridelektrofahrzeugs, welches die gleiche Fahrtstrecke 501 befährt und ähnliche Fahrzeugdaten wie das vorher betrachtete Hybridelektrofahrzeug aufweist, aber mit keiner Steuereinrichtung gemäß der Erfindung ausgestattet ist. Zusätzlich sind eine fixe Ladeabschaltgrenze 841 und eine fixe Ladezuschaltgrenze 842 dargestellt. Daneben sind noch eine Ladezustandsobergrenze 845 und eine Ladezustandsuntergrenze 846 abgebildet, die der Ladezustand nicht überschreiten beziehungsweise unterschreiten darf. Für eine gute Vergleichbarkeit entsprechen die fixen Ladeschaltgrenzen 841, 842 quantitativ den Referenz-Ladeschaltgrenzen 831, 832 und die Ladezustandsgrenzen 845, 846 entsprechen quantitativ den Ladezustandsgrenzen 835, 836.

Wie die Ladezustandskurve 847 verdeutlicht, steigt der Ladezustand entlang des Fahrtstreckenabschnitts 813 so stark an, dass der Ladezustand noch vor dem Ende des nachfolgenden Fahrtstreckenabschnitts 814 die Ladezustandsobergrenze 845 erreicht. Deshalb wird lediglich ein Teil der Rekuperationsenergie, die bei der Talfahrt bereitgestellt werden kann, vom Energiespeicher aufgenommen. Analog dazu steigt der Ladezustand entlang des Fahrtstreckenabschnitts 815 so stark an, dass der Ladezustand noch vor dem Ende des nachfolgenden Fahrtstreckenabschnitts 816 die Ladezustandsobergrenze 845 erreicht. Dadurch wird lediglich ein Teil der Rekuperationsenergie, die beim Abbremsen vor dem Stoppschild 404 bereitgestellt werden kann, vom Energiespeicher aufgenommen. Infolgedessen geht ein Teil der Bremsenergie als Wärmeenergie verloren, was die Effizienz des Hybridelektrofahrzeugs gegenüber dem Hybridfahrzeug verringert, das mit der Steuereinrichtung gemäß der Erfindung ausgestattet ist.

Im Folgenden wird wieder auf Figur 5 Bezug genommen. Wenn das Hybridelektrofahrzeug mit der erfindungsgemäßen Steuereinrichtung die Fahrtstrecke 501 befahren hat und sich am Endpunkt 502 befindet, wird das erfindungsgemäße Verfahren erneut ausgeführt, sodass eine weitere voraussichtliche Fahrtstrecke (nicht gezeigt) ermittelt wird und ein weiteres Soll-Ladezustandsprofil (nicht gezeigt) erstellt wird. Dann wird beim Befahren der weiteren Fahrtstrecke der Ladezustand des Energiespeichers entsprechend dem weiteren Soll-Ladezustandsprofil gesteuert. Auf diese Weise können entlang der Route 407 mehrere voraussichtliche Fahrtstrecken aneinandergereiht werden und der Ladezustand des Energiespeichers wird entsprechend zugehöriger Soll-Ladezustandsprofile gesteuert, bis das Hybridelektrofahrzeug die Zielposition der Route 407 erreicht.

Verlässt das Hybridelektrofahrzeug die voraussichtliche Fahrtstrecke 501, bevor das Hybridelektrofahrzeug den Endpunkt 502 der voraussichtlichen Fahrtstrecke erreicht hat, wird das erfindungsgemäße Verfahren erneut ausgeführt, sodass eine neue voraussichtliche Fahrtstrecke ermittelt wird.

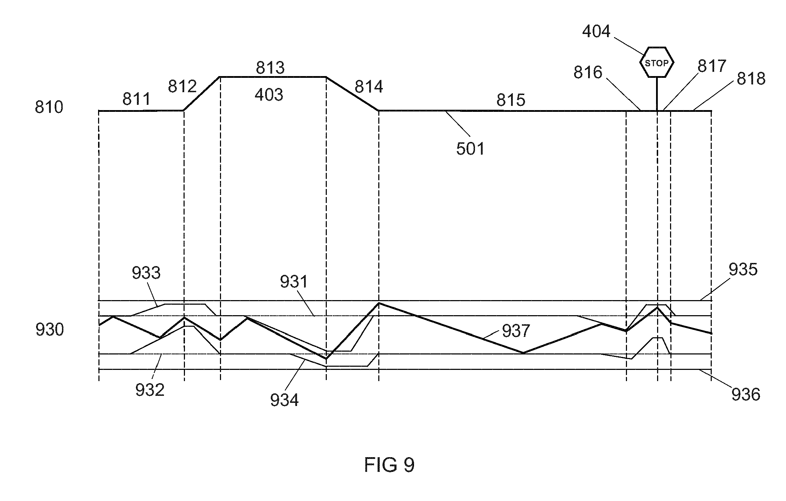

Im Folgenden wird auf **Figur 9** Bezug genommen, welche neben dem bekannten Höhenprofil 810 der Fahrtstrecke 501 einen Ladezustandsverlauf 930 zum Erläutern einer weiteren Ausführungsform des erfindungsgemäßen Verfahrens in schematischer Darstellung zeigt.

Bei der vorliegenden Ausführungsform wird die Fahrtstrecke 501 von einem Hybridelektrofahrzeug befahren, welches ähnliche Fahrzeugdaten wie die vorher betrachteten Hybridelektrofahrzeuge aufweist und mit einer Steuereinrichtung gemäß der Erfindung ausgestattet ist. Das Besondere bei dieser Ausführungsform ist, dass das erfindungsgemäße Verfahren dann erneut ausgeführt wird, wenn seit dem letzten Start des Verfahrens eine vorgegebene Zeitdauer (beispielsweise 20 Sekunden) vergangen ist. Das heißt, es wird nicht gewartet, bis das Hybridelektrofahrzeug die Fahrtstrecke 501 verlässt.

Alternativ dazu kann das erfindungsgemäße Verfahren auch dann erneut ausgeführt werden, wenn das Hybridelektrofahrzeug seit dem letzten Start des Verfahrens eine vorgegebene Weglänge (beispielsweise 100 Meter) zurückgelegt hat oder sich der Ladezustand seit dem letzten Start des Verfahrens um eine vorgegebene Ladezustandsdifferenz geändert hat.

Bei jedem Ausführen des Verfahrens wird ein diskreter Soll-Ladezustand bestimmt, welcher einer aktuellen Position des Hybridelektrofahrzeugs auf der Fahrtstrecke 501 zugeordnet ist. Der Soll-Ladezustand weist eine Ladeabschaltgrenze und eine Ladezuschaltgrenze auf, die von der Recheneinheit in Form von Steuerdaten an die Ladesteuereinheit übertragen werden. Die Ladesteuereinheit steuert den Ladezustand des Energiespeichers dann bis auf Weiteres entsprechend der erhaltenen Ladeabschaltgrenze und der erhaltenen Ladezuschaltgrenze. Sobald beim erneuten Ausführen des Verfahrens die Ladesteuereinheit eine neue Ladeabschaltgrenze und eine neue Ladezuschaltgrenze erhält, steuert die Ladesteuereinheit den Ladezustand entsprechend der neuen Ladeabschaltgrenze und der neuen Ladezuschaltgrenze, usw.

Das erfindungsgemäße Verfahren kann in kurzen Abständen und viele Male ausgeführt werden, während das Hybridelektrofahrzeug die Fahrtstrecke 501 befährt, sodass entlang der Fahrtstrecke 501 eine Vielzahl von Soll-Ladezuständen bereitgestellt wird, die jeweils eine Ladeabschaltgrenze und eine Ladezuschaltgrenze aufweisen. Ein beispielhafter Verlauf der Ladeabschaltgrenze 933 und ein beispielhafter Verlauf der Ladezuschaltgrenze 934 entlang der Fahrtstrecke 501 sind als durchgängige Linien dargestellt.

Auf diese Weise kann der Ladezustand des Energiespeichers des Hybridelektrofahrzeugs dynamisch an die tatsächlich gefahrene Fahrtstrecke, die Verkehrssituation und die Fahrweise des Fahrzeugführers des Hybridelektrofahrzeugs angepasst werden, sodass der Ladezustand noch besser und genauer optimiert wird.

In Figur 9 ist ferner eine Ladezustandskurve 937 gezeigt, welche einen beispielhaften Verlauf des Ladezustands beim Befahren der Fahrtstrecke repräsentiert und als durchgängige Linie dargestellt ist. Zusätzlich zeigt Figur 9 eine Ladezustandsobergrenze 935 und eine Ladezustandsuntergrenze 936, die als durchgängige Linien dargestellt sind. Außerdem sind eine Referenz-Ladeabschaltgrenze 931 und eine Referenz-Ladezuschaltgrenze 932 abgebildet, die als punktierte Linien dargestellt sind.

Bei einer weiteren Ausführungsform der Erfindung wird am Beginn einer Fahrtstrecke ein Soll-Ladezustandsprofil erstellt. Dabei wird wie bei der Ausführungsform vorgegangen, die bezugnehmend auf Figur 8 beschrieben wurde.

Während das Hybridelektrofahrzeug die Fahrtstrecke befährt, wird das erfindungsgemäße Verfahren mehrmals ausgeführt. Bei jedem Ausführen des erfindungsgemäßen Verfahrens wird ein Energiebedarfsprofil erstellt und unter Verwendung des Energiebedarfsprofils ein Soll-Ladezustand bestimmt. Dabei wird wie bei der vorigen Ausführungsform vorgegangen.

Die Besonderheit der vorliegenden Ausführungsform besteht darin, dass beim Bestimmen des Soll-Ladezustands neben dem Energiebedarfsprofil auch das anfänglich erstellte Soll-Ladezustandsprofil berücksichtigt wird. Auf diese Weise wird das anfänglich erstellte Soll-Ladezustandsprofil entlang der Fahrtstrecke dynamisch an den tatsächlichen Energiebedarf des Hybridelektrofahrzeugs angepasst.

Diese Vorgehensweise hat gegenüber der vorigen Ausführungsform den Vorteil, dass der Rechenaufwand beim Bestimmen des Soll-Ladezustands reduziert werden kann, indem geeignete Berechnungen nur beim Erstellen des Soll-Ladezustandsprofils am Beginn der Fahrtstrecke ausgeführt werden und diese Berechnungen beim Befahren der Fahrtstrecke nicht wiederholt werden.

## Patentansprüche

1. Verfahren zum Steuern des Ladezustands eines Energiespeichers eines Hybridfahrzeugs mit einer Rekuperationsbremse und einer Steuereinrichtung, die einen nichtflüchtigen Speicher aufweist, wobei das Verfahren folgende Schritte aufweist:
Bestimmen einer Position (405) und einer Fahrtrichtung (406) des Hybridfahrzeugs,
Ermitteln einer voraussichtlichen Fahrtstrecke (501, 701) des Hybridfahrzeugs unter Berücksichtigung der Position (405) und der Fahrtrichtung (406),
Erstellen eines der Fahrtstrecke (501, 701) zugeordneten Energiebedarfsprofils (820) auf der Basis positionsabhängiger Energiebedarfsdaten, die in dem nichtflüchtigen Speicher vorliegen und während einer vorangegangenen Fahrt eines anderen Fahrzeugs aufgezeichnet wurden,
Bestimmen eines Soll-Ladezustands unter Verwendung des Energiebedarfsprofils (820) und
Steuern des Ladezustands entsprechend dem Soll-Ladezustand.

2. Verfahren gemäß Anspruch 1,
bei dem die Energiebedarfsdaten einen Antriebsenergiebedarf, einen Standard-Grundenergiebedarf und eine Rekuperationsenergie repräsentieren.

3. Verfahren gemäß Anspruch 2,
bei dem der Standard-Grundenergiebedarf eine elektrische Energie repräsentiert, die beim Betrieb des Hybridfahrzeugs typischerweise für weitere elektrische Verbraucher neben einem Elektroantriebsmotor des Hybridfahrzeugs benötigt wird.

4. Verfahren gemäß einem der vorhergehenden Ansprüche,
bei dem die Fahrtstrecke (501) eine vorgegebene Fahrtstreckenlänge aufweist.

5. Verfahren gemäß einem der Ansprüche 1 bis 3,
bei dem die Fahrtstrecke bis zu einer Position verläuft, an welcher der Ladezustand voraussichtlich eine Ladezustandsuntergrenze erreichen würde, wenn der Energiespeicher entlang der Fahrtstrecke nicht aufgeladen würde, oder die Fahrtstrecke bis zu einer Position verläuft, an welcher der Ladezustand voraussichtlich eine Ladezustandsobergrenze erreichen würde, wenn der Energiespeicher entlang der gesamten Fahrtstrecke aufgeladen würde.

6. Verfahren gemäß einem der vorhergehenden Ansprüche,
bei dem das Energiebedarfsprofil (820) entlang der Fahrtstrecke (501) benötigte Antriebsenergie (Antriebsenergiebedarf), entlang der Fahrtstrecke (501) benötigte Energie für weitere elektrische Verbraucher neben einem Elektroantriebsmotor oder mehreren Elektroantriebsmotoren (Grundenergiebedarf) und entlang der Fahrtstrecke (501) rekuperierbare Bremsenergie (Rekuperationsenergie) des Hybridfahrzeugs repräsentiert.

7. Verfahren gemäß einem der vorhergehenden Ansprüche,
bei dem der Soll-Ladezustand eine Ladeabschaltgrenze (833) und eine Ladezuschaltgrenze (834) aufweist, die derart ausgebildet sind, dass der Energiespeicher einen Ladezustand erreichen kann, der das Decken eines erwarteten Energiebedarfs oder das Aufnehmen erwarteter Rekuperationsenergie ermöglicht.

8. Verfahren gemäß einem der vorhergehenden Ansprüche,
bei dem der Soll-Ladezustand unter Berücksichtigung von Fahrzeugdaten des Hybridfahrzeugs bestimmt wird.

9. Verfahren gemäß einem der vorhergehenden Ansprüche,
welches erneut ausgeführt wird, wenn seit dem letzten Start des Verfahrens eine vorgegebene Zeitdauer vergangen ist, das Hybridfahrzeug seit dem letzten Start des Verfahrens eine vorgegebene Weglänge zurückgelegt hat oder sich der Ladezustand seit dem letzten Start des Verfahrens um eine vorgegebene Ladezustandsdifferenz geändert hat.

10. Verfahren gemäß Anspruch 9,
bei dem vor dem erstmaligen Ausführen des Verfahrens ein Soll-Ladezustandsprofil erstellt wird und jeder der Soll-Ladezustände unter Berücksichtigung des Soll-Ladezustandsprofils bestimmt wird.

11. Verfahren gemäß einem der Ansprüche 1 bis 8,
bei dem unter Verwendung des Energiebedarfsprofils (820) ein der Fahrtstrecke (501) zugeordnetes Soll-Ladezustandsprofil (830) erstellt wird und der Ladezustand entsprechend dem Soll-Ladezustandsprofil (830) gesteuert wird.

12. Verfahren gemäß Anspruch 11,
welches erneut ausgeführt wird, wenn das Hybridfahrzeug einen Endpunkt (502) der Fahrtstrecke (501) erreicht oder die Fahrtstrecke (501) verlässt.

13. Steuereinrichtung zum Steuern des Ladezustands eines Energiespeichers eines Hybridfahrzeugs mit einer Rekuperationsbremse, wobei die Steuereinrichtung aufweist:
eine Positionsbestimmungseinheit, die zum Bestimmen einer Position (405) des Hybridfahrzeugs eingerichtet ist,
einen nichtflüchtigen Speicher, in dem positionsabhängigen Energiebedarfsdaten vorliegen, die während einer vorangegangenen Fahrt eines anderen Fahrzeugs aufgezeichnet wurden,
eine Recheneinheit, die zum Bestimmen einer Fahrtrichtung (406) des Hybridfahrzeugs, Ermitteln einer voraussichtlichen Fahrtstrecke (501, 701) des Hybridfahrzeugs unter Berücksichtigung der Position (405) und der Fahrtrichtung (406), Erstellen eines der Fahrtstrecke (501) zugeordneten Energiebedarfsprofils (820) auf der Basis der im nichtflüchtigen Speicher vorliegenden positionsabhängigen Energiebedarfsdaten und Bestimmen eines Soll-Ladezustands unter Verwendung des Energiebedarfsprofils (820) eingerichtet ist, und
eine Ladesteuereinheit, die zum Steuern des Ladezustands entsprechend dem Soll-Ladezustand eingerichtet ist.

## Claims

1. Method for controlling a charge state of an energy storage of a hybrid vehicle with a recuperative brake and a control device which comprises a non-volatile memory, the method comprising the steps of:
determining a position (405) and a driving direction (406) of the hybrid vehicle,
identifying a prospective route (501, 701) of the hybrid vehicle considering the position (405) and the driving direction (406),
creating an energy demand profile (820) assigned to the route (501, 701) based on position-dependent energy demand data which exist in the non-volatile memory and were recorded during a preceding drive of another vehicle,
determining a target charge state using the energy demand profile (820), and
controlling the charge state according to the target charge state.

2. Method according to claim 1
wherein the energy demand data represent a driving energy demand, a standard basic energy demand and a recuperative energy.

3. Method according to claim 2
wherein the standard basic energy demand represents an electric energy which is typically required during the operation of the hybrid vehicle for further electric consumers beside an electric driving motor of the hybrid vehicle.

4. Method according to one of the preceding claims
wherein the route (501) comprises a predefined path length.

5. Method according to one of the claims 1 to 3
wherein the route continues to a position where the charge state would reach a charge state lower limit prospectively if the energy storage would not be charged along the route or the route continues to a position where the charge state would reach a charge state higher limit prospectively if the energy storage would be charged along the entire route.

6. Method according to one of the preceding claims
wherein the energy demand profile (820) represents driving energy which is required along the route (501) (driving energy demand), energy which is required along the route (501) for further electric consumers beside an electric driving motor or multiple electric driving motors (basic energy demand), and braking energy (recuperative energy) which can be regenerated along the route (501) of the hybrid vehicle.

7. Method according to one of the preceding claims
wherein the target charge state comprises a charge switch-off limit (833) and a charge switch-on limit (834) which are designed in such a way that the energy storage can reach a charge state which enables covering an expected energy demand or receiving an expected recuperative energy.

8. Method according to one of the preceding claims
wherein the target charge state is determined by considering vehicle data of the hybrid vehicle.

9. Method according to one of the preceding claims
which is performed again if a predefined time period has elapsed since the last start of the method, the hybrid vehicle has covered a predefined path length since the last start of the method, or the charge state has changed by a predefined charge state difference since the last start of the method.

10. Method according to claim 9
wherein a target charge state profile is created before the method is performed for the first time and each of the target charge states is determined by considering the target charge state profile.

11. Method according to one of the claims 1 to 8
wherein a target charge state profile (830) assigned to the route (501) is created by using the energy demand profile (820) and the charge state is controlled according to the target charge state profile (830).

12. Method according to claim 11
which is performed again if the hybrid vehicle reaches an end point (502) of the route (501) or leaves the route (501).

13. Control device for controlling the charge state of an energy storage of a hybrid vehicle with a recuperative brake, the control device comprising:
a positioning unit designed for determining a position (405) of the hybrid vehicle,
a non-volatile memory comprising position-dependerit energy demand data which were recorded during a preceding drive of another vehicle,
a processing unit designed for determining a driving direction (406) of the hybrid vehicle, identifying a prospective route (501, 701) of the hybrid vehicle considering the position (405) and the driving direction (406), creating an energy demand profile (820) assigned to the route (501) based on the position-dependent energy demand data in the non-volatile memory and determining a target charge state using the energy demand profile (820), and
a charge control unit designed for controlling the charge state according to the target charge state.

## Revendications

1. Procédure de commande de l'état de charge d'un accumulateur d'énergie d'un véhicule hybride équipé d'un frein à récupération et d'une unité de commande possédant une mémoire non volatile, la procédure étant constituée des étapes suivantes :
détermination d'une position (405) et d'un sens de marche (406) du véhicule hybride,
détermination d'un itinéraire prévu (501, 701) du véhicule hybride, tenant compte de la position (405) et du sens de marche (406),
définition d'un profil de consommation d'énergie (820) attribué à l'itinéraire (501, 701), basé sur les données de consommation d'énergie en fonction de la position, qui sont disponibles dans la mémoire non volatile et qui ont été enregistrées lors d'une marche précédente d'un autre véhicule,
détermination d'un état de charge théorique à partir du profil de consommation d'énergie (820) et
commande de l'état de charge en fonction de l'état de charge théorique.

2. Procédure selon la revendication 1,
**caractérisée en ce que** les données de consommation d'énergie représentent une consommation d'énergie de traction, une consommation d'énergie de base standard et une énergie récupérée.

3. Procédure selon la revendication 2,
**caractérisée en ce que** la consommation d'énergie de base standard représente une énergie électrique requise typiquement lors du fonctionnement du véhicule hybride pour d'autres consommateurs électriques, outre un moteur de traction électrique du véhicule hybride.

4. Procédure selon l'une des revendications précédentes,
**caractérisée en ce que** l'itinéraire (501) a une longueur d'itinéraire définie.

5. Procédure selon l'une des revendications 1 à 3,
**caractérisée en ce que** l'itinéraire mène à une position à laquelle l'état de charge atteindrait vraisemblablement une limite inférieure de l'état de charge si l'accumulateur d'énergie n'était pas rechargé le long de l'itinéraire, ou que l'itinéraire mène à une position à laquelle l'état atteindrait vraisemblablement une limite supérieure de l'état de charge si l'accumulateur d'énergie était rechargé le long de l'ensemble de l'itinéraire.

6. Procédure selon l'une des revendications précédentes,
**caractérisée en ce que** le profil d'énergie (820) représente l'énergie de traction (consommation d'énergie de traction) requise le long de l'itinéraire (501), l'énergie (consommation d'énergie de base) requise le long de l'itinéraire (501) pour d'autres consommateurs électriques, outre un moteur de traction électrique ou plusieurs moteurs de traction électriques, et l'énergie de freinage (énergie récupérée) récupérable le long de l'itinéraire (501), du véhicule hybride.

7. Procédure selon l'une des revendications précédentes,
**caractérisée en ce que** l'état de charge théorique présente une limite de désactivation de la charge (833) et une limite d'activation de la charge (834) définies de telle sorte que l'accumulateur d'énergie puisse atteindre un état de charge permettant de couvrir une consommation d'énergie prévue ou assurer une récupération d'énergie prévue.

8. Procédure selon l'une des revendications précédentes,
**caractérisée en ce que** l'état de charge théorique est défini en fonction de données du véhicule hybride.

9. Procédure selon l'une des revendications précédentes,
**caractérisée en ce que** la procédure est relancée lorsqu'une durée définie s'est écoulée depuis le dernier lancement de la procédure, que le véhicule hybride a parcouru une distance définie depuis le dernier lancement de la procédure ou que l'état de charge a varié d'une différence d'état de charge définie depuis le dernier lancement de la procédure.

10. Procédure selon la revendication 9,
**caractérisée en ce qu'**un profil d'état de charge théorique est défini avant le premier lancement de la procédure et que chacun des états de charge théoriques est défini en fonction du profil d'état de charge théorique.

11. Procédure selon l'une des revendications 1 à 8,
**caractérisée en ce qu'**un profil d'état de charge théorique (830) attribué à l'itinéraire (501) est défini en fonction du profil de consommation d'énergie (820) et que la commande de l'état de charge est effectuée en fonction du profil d'état de charge théorique (830).

12. Procédure selon la revendication 11,
**caractérisée en ce que** la procédure est relancée lorsque le véhicule hybride atteint un point final (502) de l'itinéraire (501) ou qu'il quitte l'itinéraire (501).

13. Dispositif de commande de l'état de charge d'un accumulateur d'énergie d'un véhicule hybride équipé d'un frein à récupération, possédant :
une unité de définition de position configurée pour déterminer une position (405) du véhicule hybride,
une mémoire non volatile contenant des données de consommation d'énergie en fonction de la position, qui ont été enregistrées lors d'une marche précédente d'un autre véhicule,
une unité de calcul configurée pour déterminer un sens de marche (406) du véhicule hybride, pour déterminer un itinéraire prévu (501, 701) du véhicule hybride en tenant compte de la position (405) et du sens de marche (406), pour définir un profil de consommation d'énergie (820) attribué à l'itinéraire (501), basé sur les données de consommation d'énergie en fonction de la position, qui sont disponibles dans la mémoire non volatile, et pour déterminer un état de charge théorique à partir du profil de consommation d'énergie (820), et
une unité de commande de charge configurée pour la commande de l'état de charge en fonction de l'état de charge théorique.
